# EUROPEAN PATENT APPLICATION

(11) **EP 1 796 077 A2**
(43) Date of publication of application: **13.06.2007**
(21) Application number: 06077103.7
(22) Date of filing: 27.11.2006
(51) Int. Cl.: G10K 11/178

(54) **Excitation of air directing valves and air handling surfaces in the cancellation of air handling system noise**

(30) Priority: 07.12.2005 US 296200
(71) Applicant: Delphi Technologies, Inc., Troy, Michigan 48007 (US)
(72) Inventor: Michell, Frank, Grosse Pointe Park, MI 48230 (US); Urban, Paul J., Commerce TWP, MI 48382 (US)
(74) Representative: Denton, Michael John

(57) **Abstract**

A piezoelectric vibrator (24) generates attenuating waves (20) in an air duct (12) in an automobile HVAC system (10) to cancel or reduce the noise created by sound waves (14). A processor (32) converts a sinusoidal noise signal (18) into an attenuation signal (34), which is the additive inverse of the sinusoidal noise signal (18). The processor (32) may include an inverter (36) or a phase-shifter (38) to create the attenuation signal (34), as well as an amplifier (40) to adjust the amplitude of the attenuation signal (34). The attenuation signal (34) drives the piezoelectric vibrator (24).

## Description

### TECHNICAL FIELD

The present invention relates to a system for reducing noise in an air flow structure.

### BACKGROUND OF THE INVENTION

Various noise-reducing systems in air flow structures are known in the prior art. The prior art generally discloses noise-reducing systems that include an air duct that defines an air flow passage to convey an air flow having sound waves, and having a sensor that senses the sound waves to produce a noise signal in response to the sound waves. The prior art also discloses a driver that is responsive to the noise signal, and vibrates to attenuate the sound waves. An example of such a device is disclosed in U.S. Patent No. 5,791,869 (the '869 patent), which discloses a noise-reducing system that includes an actuator connected to a fan mounted inside an air duct. A sensor inside the air duct detects noise generated by the fan, and in response, the actuator vibrates the fan blade to dampen the noise.

The prior art systems, such as the system disclosed in the '869 patent, control noise in an air duct by manipulating the physical characteristics of the noise generating source. Specifically, the actuator in the '869 patent induces vibrations on the fan blade to overcome noise that is generated through turbulent air. The system disclosed by the '869 system only cancels noise generated in the system by the fan blade.

Although the noise-reducing systems of the prior art may be used in a variety of applications, an opportunity remains to develop noise-reducing systems to improve quality, reduce space, and reduce cost. In automotive HVAC systems, space and resources are limited. However, the systems disclosed by the prior art often require additional space for storing the various components relating to noise reduction, such as speakers. In addition, noise-reducing systems that use speakers require specific resources, such as audio systems, in order to operate. Customers of the automobile industry demand improvements in noise reduction and cancellation. Accordingly, luxury automobiles are marketed to feature components that reduce noise. An effective noise-reducing system significantly improves the perceived noise performance of the air flow system, which in turn improves the value of the automobile. Therefore, there is a continuing objective to improve the quality of the noise-reducing system and, at the same time, provide a noise-reducing system that is less cost and space prohibitive.

### SUMMARY OF THE INVENTION

The subject invention provides for a system for reducing noise in an air flow structure. The system includes an air duct that defines an air flow passage for conveying an air flow having sound waves therein. A sensor is located in the air duct for sensing the sound waves and producing a noise signal in response to the sound waves in the air duct. A driver is supported in the air duct and is responsive to the noise signal for vibrating in the air duct to attenuate the sound waves in the duct. The system is distinguished by the driver including a piezoelectric vibrator.

Accordingly, the subject invention provides an improved system for reducing noise in an air flow structure by using the piezoelectric vibrator to dampen noise generated by the system. The piezoelectric vibrator may be placed inside the air duct to accommodate space constraints, and the piezoelectric vibrator operates independently of other systems, which reduces the cost of maintaining and operating the noise-reducing system. Furthermore, because the piezoelectric vibrator has a low profile, it may be placed throughout the air duct to improve noise-reducing quality. Therefore, the result of the subject invention is a system for reducing noise in an air flow structure that has improved quality, reduced cost, and reduced space constraints with respect to the systems disclosed by the prior art.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is a perspective view of a noise-reducing system assembled in accordance with a first embodiment of the subject invention;
Figure 2 is a perspective view of the noise-reducing system assembled in accordance with a second embodiment of the subject invention;
Figure 3 is a schematic view of a control system used in accordance with the subject invention.
Figure 4 is a perspective view of the noise-reducing system assembled in accordance with the subject invention; and

### DESCRIPTION OF THE PREFERRED EMBODIMENTS

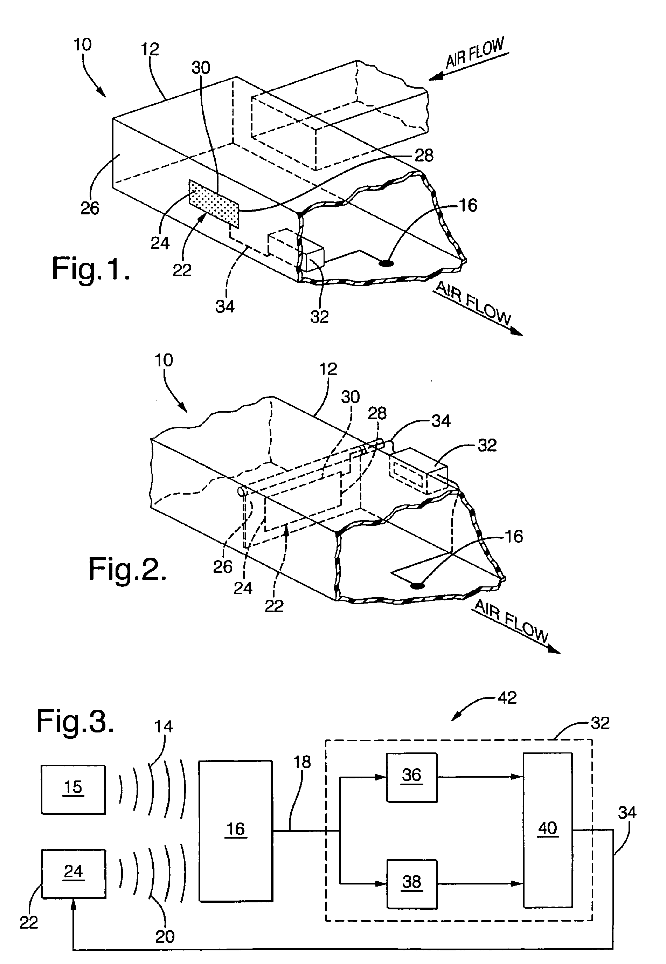

Referring to the Figures, wherein like numerals indicate corresponding parts throughout the several views, a system **10** for reducing noise in an air flow structure is shown generally at reference numeral **10.** As shown in Figures 1 and 2, the system **10** includes an air duct **12** that defines an air flow passage to convey an air flow. Sound waves **14** are generated by a blower assembly **15** that moves air through the air duct **12.** The blower assembly **15** may include a blower or a fan blade, typically housed inside the air duct **12.** The blower assembly **15** may include a motor that creates the sound waves **14** outside the air duct **12.** Consequently, the sound waves **14** may be generated by the blower assembly **15** disposed internally and/or externally with respect to the air duct **12.**

The sound waves **14** are detected by a sensor **16** located in the air duct **12.** The sensor **16** may be a device, such as a microphone, that includes a transducer capable of receiving the sound waves **14** and converting the sound waves **14** to a sinusoidal noise signal **18** that is representative of the sound wave **14.** It should be understood that more than one sensor **16** may be used to convert the sound waves **14** to the sinusoidal noise signal **18.** The sinusoidal noise signal **18** is mathematically defined with respect to an x-axis representing an angle, and a y-axis, which is a function of the angle, representing an amplitude. Based on the angle, the sinusoidal noise signal **18** has a crest where the amplitude reaches a maximum value. For example, the sinusoidal noise signal **18** may have the crest at an angle of 90 degrees. The sinusoidal noise signal **18** has a trough where the amplitude reaches a minimum value. For example, the sinusoidal noise signal **18** may have the trough at an angle of 270 degrees. A wavelength of the sinusoidal noise signal **18** may be defined as the distance along the x-axis between the crests.

The noise-reducing system **10** further includes a driver **22** supported in the air duct **12** that vibrates in response to the sound waves **14.** In order to maintain a low profile, the driver **22** may include a piezoelectric vibrator **24** supported on a wall **26** of the air duct **12.** The wall **26** of the air duct **12** may include an opening **28,** in which case the piezoelectric vibrator **24** is disposed over the opening **28.** Furthermore, the piezoelectric vibrator **24** may be a thin piezoelectric film. The piezoelectric film may be secured to the wall **26** of the air duct **12** through various means. For example, the wall **26** may include a plastic **30** component to which the piezoelectric film is bonded or molded. Referring now to Figure 2, the wall **26** of the air duct **12** may be movably supported for regulating the air flow through the air duct **12.** As shown in Figure 2, the wall **26** extends perpendicularly across the air duct **12** to block the air flow passage, and the piezoelectric film is disposed over the wall **26.** In this embodiment, the wall **26** rotates to allow differing amounts of air to pass through the air duct **12,** i.e., to regulate the air flow.

In addition, the noise-reducing system **10** may include a processor **32** connected between the sensor **16** and the piezoelectric vibrator **24** for manipulating the sinusoidal noise signal **18** to create an attenuation signal **34.** The attenuation signal **34** is then used to vibrate the piezoelectric vibrator **24,** which produces the attenuating waves **20.** To effectively cancel or reduce the sound waves **14,** the attenuating waves **20** are essentially equal to the additive inverse of the sound waves **14.** In order for the attenuating waves **20** to be the additive inverse of the sound waves **14,** the crest of the sound waves **14** occurs at roughly the same time as the trough of the attenuating waves **20.** Likewise, the crest of the amplitude of the attenuating waves **20** occur at roughly the same time as the trough of the amplitude of the sound waves **14** since the attenuating waves **20** and the sound waves **14** have the same wavelength. Therefore, when the sound waves **14** are combined with the attenuating waves **20,** the sound waves **14** will be cancelled or reduced, resulting in a null wave having an amplitude of essentially zero. It should be understood that the attenuating waves **20** are related to the attenuation signal **34,** and the sinusoidal noise signal **18** is related to the sound waves **14** such that the processor **32** may generate the attenuation signal **34** to be the additive inverse of the sinusoidal noise signal **18,** which will create the attenuating waves **20** to be the additive inverse of the sound waves **14.**

The processor **32** may generate the attenuation signal **34** using various devices. For example, an inverter **36** may be included within the processor **32.** The inverter **36** may receive the sinusoidal noise signal **18** and rotate it around the x-axis by multiplying the sinusoidal noise signal **18** by a factor of negative one to create the attenuation signal **34.** Following this method, the attenuation signal **34** will have the same amplitude as the sinusoidal noise signal **18** but the crest of the amplitude of the attenuation signal **34** will occur at the same time as the trough of the amplitude of the sinusoidal noise signal **18.** Likewise, the crest of the amplitude of the sinusoidal noise signal **18** will occur at roughly the same time as the trough of the amplitude of the attenuation signal **34** since the sinusoidal noise signal **18** and the attenuation signal **34** have the same wavelength. Therefore, the attenuation signal **34** will be the additive inverse of the sinusoidal noise signal **18,** and the attenuating waves **20** created from the attenuation signal **34** will cancel or reduce the sound waves **14.**

Another method of generating the attenuation signal **34** is to manipulate the sinusoidal noise signal **18** with a phase-shifter **38.** The phase-shifter **38** may create the attenuation signal **34** by outputting the sinusoidal noise signal **18** shifted along the x-axis. For example, the phase-shifter **38** may shift the sinusoidal noise signal **18** by 180 degrees to create the attenuation signal **34** to be the additive inverse of the sinusoidal noise signal **18.** However, it should be understood that phase-shifts of varying magnitude may shift the attenuation signal **34** to be the additive inverse of the sinusoidal noise signal **18.** Furthermore, the phase-shifter **38** may manipulate the sinusoidal noise signal **18** to accommodate for a time delay between the sensor **16** receiving the sound wave **14** and the processor **32** producing the attenuation signal **34.** It should be noted that the phase-shifter **38** may be used in addition to, or instead of the inverter **36.**

In addition to using at least one of the inverter **36** and the phase-shifter **38,** the processor **32** may include an amplifier **40** to adjust the amplitude of the attenuation signal **34.** The amplifier **40** stretches the attenuation signal **34** in the direction of the y-axis without affecting the angle represented by the x-axis. Once the sinusoidal noise signal **18** is phase-shifted, inverted, or both, the attenuation signal **34** may have sustained losses in amplitude. Although these losses may be negligible, in order to be the additive inverse of the sinusoidal noise signal **18,** and effectively cancel noise, the amplitude of the attenuation signal **34** should be as close to being equal and opposite to the amplitude of the sinusoidal noise signal **18** as possible. For that reason, the amplifier **40** may be needed to adjust the amplitude of the attenuation signal **34.**

Once the attenuation signal **34** is created to be the additive inverse of the sinusoidal noise signal **18,** the attenuation signal **34** is transmitted to the piezoelectric vibrator **24.** The piezoelectric vibrator **24** vibrates in response to the attenuation signal **34** to produce the attenuating waves **20.** The attenuating waves **20,** when added to the sound waves **14,** create the null wave having an amplitude of essentially zero. Therefore, the sound waves **14** in the air duct **12** are cancelled or reduced.

Figure 3 is an example of a schematic view of a control system **42** that may be used to enable the noise-reducing system **10** to cancel or reduce noise. As shown in Figure 3, the sound waves **14** produced by the blower assembly **15** are received by the sensor **16.** The sensor **16** then converts the sound waves **14** and the attenuating waves 20 into the sinusoidal noise signal **18.** The sinusoidal noise signal **18** is then transmitted to at least one of the inverter **36** and the phase-shifter **38** housed within the processor **32** to create the attenuation signal **34.** The processor **32** creates the attenuation signal **34** in response to the sinusoidal noise signal **18.** In addition to being inverted or phase-shifted, the sinusoidal noise signal **18** may also be amplified to create the attenuation signal **34.** The processor **32** then outputs the attenuation signal **34,** which is used to control the piezoelectric vibrator **24.** In response to the attenuation signal **34,** the piezoelectric vibrator **24** produces the attenuating waves **20.** Both the attenuating waves **20** and the sound waves **14** are received by the sensor **16.** If the attenuating waves **20** are the additive inverse of the sound waves **14,** then the attenuating waves **20** will cancel the sound waves **14.** However, slight errors may cause some of the sound waves **14** to pass to the sensor **16.** In this case, the sensor **16** repeats the process using both the attenuating waves **20** and the sound waves **14** as inputs. This way, the noise-reducing system **10** receives feedback, and can adjust the attenuation signal **34** to compensate for sound waves **14** that are not being cancelled.

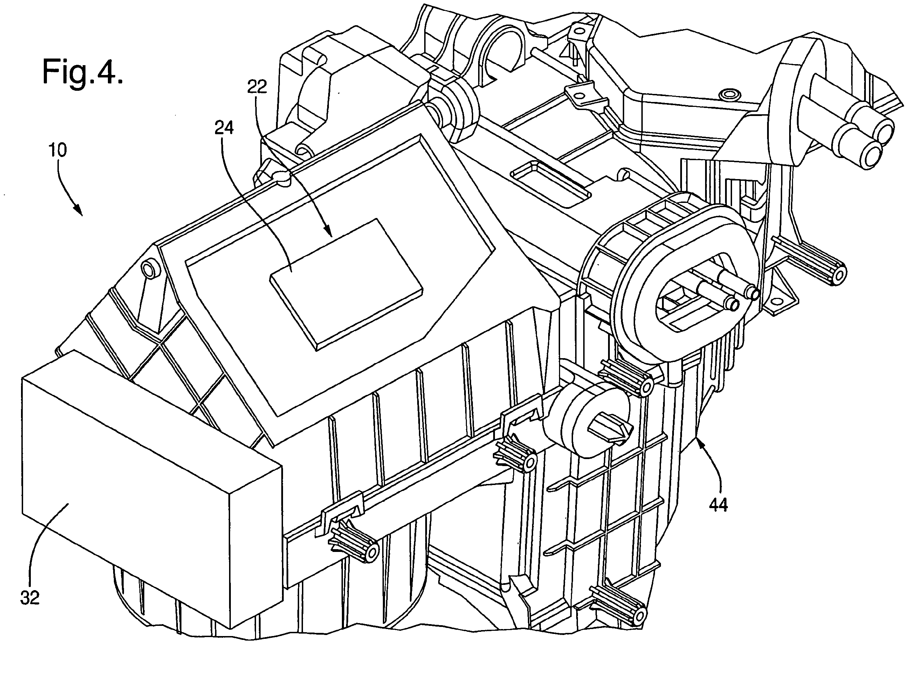

The system **10** as described herein may be used to cancel or reduce noise in various types of airflow devices. For example, as shown in Figure 4, the driver **22** may be used with a HVAC module **44.** As previously shown in Figures 1-3, the driver **22** includes a piezoelectric vibrator **24** that vibrates to reduce noise generated by air that flows through the HVAC module **44.**

Obviously, many modifications and variations of the present invention are possible in light of the above teachings. The invention may be practiced otherwise than as specifically described within the scope of the appended claims.

## Claims

1. A system **(10)** for reducing noise in an air flow structure comprising; an air duct **(12)** defining an air flow passage for conveying an air flow having sound waves **(14)** therein,
a sensor **(16)** in said air duct **(12)** for sensing the sound waves **(14)** and producing a noise signal in response to the sound waves **(14)** in said air duct **(12),**
a driver **(22)** supported in said air duct **(12)** and responsive to the noise signal for vibrating in said air duct **(12)** to attenuate the sound waves **(14)** in said duct, and
said driver **(22)** including a piezoelectric vibrator **(24).**

2. The system **(10)** as set forth in claim 1 further comprising a processor **(32)** electrically connected between said sensor **(16)** and said driver **(22)** and responsive to the noise signal for producing an attenuation signal **(34)** to vibrate said piezoelectric vibrator **(24)** to produce attenuating waves **(20)** in opposition to the sound waves **(14).**

3. The system **(10)** as set forth in claim 2 wherein said processor **(32)** includes an amplifier **(40)** for amplifying the noise signal.

4. The system **(10)** as set forth in claim 2 wherein said sensor **(16)** includes a noise signal that is sinusoidal and said processor **(32)** includes a phase-shifter **(38)** for shifting a phase of the sinusoidal noise signal **(18).**

5. The system **(10)** as set forth in claim 2 wherein said sensor **(16)** includes a noise signal that is sinusoidal and said processor **(32)** includes an inverter **(36)** for inverting the sinusoidal noise signal **(18).**

6. The system **(10)** as set forth in claim 1 wherein said air duct **(12)** includes a wall **(26)** and said piezoelectric vibrator **(24)** is supported on said wall **(26).**

7. The system **(10)** as set forth in claim 6 wherein said wall **(26)** includes an opening **(28)** and said piezoelectric vibrator **(24)** is disposed over said opening **(28).**

8. The system **(10)** as set forth in claim 7 wherein said wall **(26)** comprises a plastic **(30)** and said piezoelectric vibrator **(24)** is a film having edges secured to said wall **(26)** about said opening **(28).**

9. The system **(10)** as set forth in claim 7 wherein said wall **(26)** is movably supported in said air duct **(12)** for regulating the air flow through said air duct **(12).**

10. The system **(10)** as set forth in claim 1 including a blower assembly **(15)** for moving air through said air duct **(12)** and producing the sound waves **(14)** in said air duct **(12)** to be attenuated by said piezoelectric vibrator **(24).**
